# EUROPÄISCHE PATENTSCHRIFT

(11) **EP 0 579 031 B1**
(45) Veröffentlichungstag und Bekanntmachung des Hinweises auf die Patenterteilung: **09.09.1998**
(21) Anmeldenummer: 93110404.6
(22) Anmeldetag: 30.06.1993
(51) Int. Cl.: B65H 31/30, B65H 13/00

(54) **Verfahren und Vorrichtung zum Handhaben von Zuschnitt-Stapeln**
Method and device for handling stacks of blanks
Procédé et dispositif pour manipuler des piles de découpes

(30) Priorität: 10.07.1992 DE 4222609
(43) Veröffentlichungstag der Anmeldung: 19.01.1994
(73) Patentinhaber: Focke & Co. (GmbH & Co.), 27283 Verden (DE)
(72) Erfinder: Focke, Heinz, D-2810 Verden (DE); Livotov, Pavel, Dr., D-3000 Hannover 1 (DE)
(74) Vertreter: Meissner & Bolte Patentanwälte

(56) Entgegenhaltungen:
- EP-A- 0 270 943
- EP-A- 0 422 562
- DE-A- 3 221 351
- DE-A- 3 910 817

## Beschreibung

Die Erfindung betrifft ein Verfahren zum Handhaben von Zuschnitt-Stapeln im Zusammenhang mit einer Verpackungsmaschine, wobei die Zuschnitt-Stapel auf einer Unterlage ruhen und von dieser zur Verarbeitung in der Verpackungsmaschine abgehoben werden. Weiterhin betrifft die Erfindung eine Vorrichtung zur Durchführung des Verfahrens.

Die Handhabung des Verpackungsmaterials ist bei Verpackungsmaschinen hoher Leistungsfähigkeit, zum Beispiel bei Zigaretten-Verpackungsmaschinen, ein besonderes Problem. Dies gilt um so mehr, wenn das Verpackungsmaterial in Gestalt von anderweitig vorgefertigten, gestapelten Zuschnitten zur Verfügung gestellt wird. Zigaretten-Packungen des Typs Klappschachtel (Hinge-Lid-Packung) werden aus Zuschnitten aus dünnem Karton gefertigt. Diese werden vom Hersteller als Zuschnitt-Stapel angeliefert, zum Beispiel auf einer Palette.

Die Erfindung befaßt sich mit dem Problem der selbsttätigen, mechanischen Handhabung der Zuschnitt-Stapel ohne manuellen Eingriff. Es geht darum, die Zuschnitt-Stapel von der Unterlage (Palette) abzunehmen und in den Verpackungsprozeß einzuführen.

Bekannt sind Vorrichtungen, die einen oder mehrere Stapelhalter zum Erfassen und Halten je eines Zuschnitt-Staptels aufweisen. Die Stapelhalter bestehen aus einer an der Unterseite des Zuschnitt-Stapels anliegenden Klemmzunge und einem an der Oberseite wirksamen Gegendruckorgan (DE-A-37 18 601). Das Problem besteht bei derartigen Vorrichtungen darin, die Klemmzunge unter den auf einer Unterlage liegenden Zuschnitt-Stapel zu bringen. Bei der vorstehend erwähnten bekannten Vorrichtung wird der Zuschnitt-Stapel durch ein an der Oberseite wirkendes Druckstück verformt, derart, daß auf der der Klemmzunge zugeordneten Seite ein Spalt unterhalb des Stapels entsteht. In diesen wird die Klemmzunge eingeführt.

Aus der EP-A-0 422 562 ist eine Vorrichtung bekannt, bei der Teilstapel von Zuschnitten durch seitlich angreifende Klemmorgane geringfügig angehoben werden. In den entstehenden Spalt zwischen dem Teilstapel und dem darunter befindlichen Reststapel wird Druckluft eingeblasen und so das seitliche Abschieben des Teilstapels unterstützt.

Der Erfindung liegt die Aufgabe zugrunde, die eingangs genannte Vorrichtung dahingehend weiter zu entwickeln und zu verbessern, daß bei hoher Leistung die Zuschnitt-Stapel zuverlässig und ohne Gefahr von Beschädigungen der unteren Zuschnitte erfaßt und abtransportiert werden können.

Zur Lösung dieser Aufgabe ist das erfindungsgemäße Verfahren dadurch gekennzeichnet, daß beim Anheben des Zuschnitt-Stapels von der Unterlage nicht erfaßte, wenige, untere Zuschnitte des Zuschnitt-Stapels durch einen Luftstrom mit angehoben werden, der neben dem Zuschnitt-Stapel von oben her auf die Unterlage gerichtet wird, und daß dann der Zuschnitt-Stapel komplett erfaßt wird.

Der Erfindung liegt die Erkenntnis zugrunde, daß beim Anheben eines Zuschnitt-Stapels vor allem durch Organe, die an Seitenflächen des Zuschnitt-Stapels wirksam werden, untenliegende Zuschnitte nicht mit erfaßt werden. Um aber den Zuschnitt-Stapel komplett zu erfassen, wird erfindungsgemäß neben dem Zuschnitt-Stapel von oben her ein Luftstrahl auf die Unterlage gerichtet. Überraschenderweise werden durch diesen Luftstrahl die unteren Zuschnitte von der Unterlage abgehoben und dem Zuschnitt-Stapel zugeführt.

Die erfindungsgemäße Vorrichtung besteht aus mindestens einem Stapelheber zum Anheben des Stapels von der Unterlage und wenigstens einer Luftdüse, durch die ein nach unten gerichteter Luftstrahl gegen die Unterlage gerichtet wird.

Die komplette Vorrichtung ist zweckmäßigerweise so ausgebildet, daß der vollständig durch Stapelheber und Blasluft angehobene Zuschnitt-Stapel durch einen Stapelhalter erfaßt und abtransportiert wird, der den Stapel durch entsprechende Halteorgane an Oberseite und Unterseite erfaßt.

Erfindungsgemäß besteht die Vorrichtung aus mehreren nebeneinander angeordneten Einheiten, je zum Erfassen eines Zuschnitt-Stapels, so daß zum Beispiel vier Zuschnitt-Stapel gleichzeitig aufgenommen und abtransportiert werden können. Ein so ausgebildeter Hubkopf kann beispielsweise an einem Roboter, nämlich an dem Gelenkarm desselben, angebracht sein.

Der Hubkopf kann nach einem weiteren Vorschlag der Erfindung auch zum Abnehmen von Zwischenlagen verwendet werden, die jeweils übereinander angeordnete Lagen der Zuschnitt-Stapel voneinander trennen. Diese zum Beispiel aus Papier bestehenden Zwischenlagen werden erfindungsgemäß durch den Hubkopf an einem Rand erfaßt und im Sinne eines Abrollens bzw. Abziehens von den sich darunter befindenden Zuschnitt-Stapeln reibungsfrei abgenommen.

Weitere Einzelheiten der Erfindung werden nachfolgend anhand eines Ausführungsbeispiels näher erläutert. Es zeigt:
- Fig. 1: Einen Teil eines Hubkopfes in Seitenansicht, teilweise im Vertikalschnitt,
- Fig. 2: einen Hubkopf im Grundriß,
- Fig. 3 bis Fig. 5: einen Teil eines Hubkopfes während der Aufnahme eines Zuschnitt-Stapels in Seitenansicht,

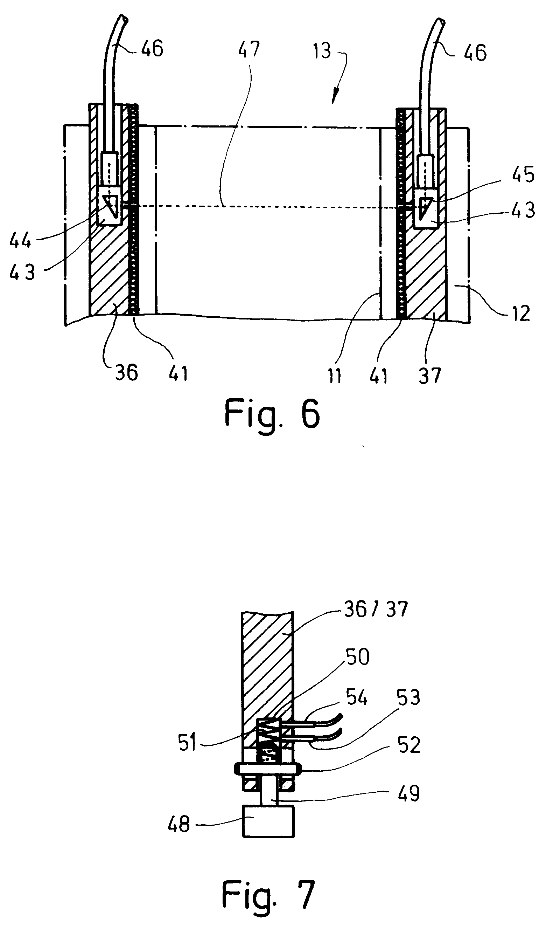

- Fig. 6: eine Einzelheit eines Hubkopfes, nämlich einen Vertikalschnitt durch Klemmbacken desselben,
- Fig. 7: eine weitere Einzelheit, nämlich ebenfalls einen Vertikalschnitt durch eine Klemmbacke im unteren Bereich derselben,
- Fig. 8: eine Palette mit Zuschnitt-Stapeln während des Abnehmens einer Zwischenlage.

Das Ausführungsbeispiel in den Zeichnungen befaßt sich mit der Handhabung von Zuschnitten 10 aus dünnem Karton. Konkret handelt es sich um Zuschnitte für Zigaretten-Packungen des Typs Klappschachtel (Hinge-Lid). Diese Zuschnitte 10 und die daraus gefertigten Packungen haben weltweit eine nahezu übereinstimmende Gestaltung. Eine Besonderheit dieser Zuschnitte besteht darin, daß im Bereich eines Kopfendes, der zur Bildung eines Deckels der Packung dient, ein mittig liegender Vorsprung 11 gebildet ist. Dieser hat eine deutlich geringere Breite als der Zuschnitt 10 im übrigen. Der Vorsprung 11 dient bei der Packung zur Bildung eines Deckel-Innenlappens, der nach entsprechender Faltung an der Innenseite einer Vorderwand des Deckels anliegt.

An den Vorsprung 11 schließt eine schräg verlaufende Kante 12 an beiden Seiten des Zuschnitts an. Auch diese schräge Kante 12 entspricht der üblichen Gestaltung eines Zuschnitts 10 für diesen Packungstyp. Die Kante 12 ist die untere Begrenzung einer äußeren Seitenwand des Deckels.

Die Zuschnitte 10 werden für die Verarbeitung, insbesondere in einer Verpackungsmaschine (nicht dargestellt) als Stapel angeliefert, nämlich als Zuschnitt-Stapel 13. Dieser besteht aus etwa 500 Zuschnitten 10.

Mehrere Zuschnitt-Stapel 13 werden auf einer Unterlage zur Verfügung gestellt. Bei dem vorliegenden Ausführungsbeispiel sind die Zuschnitt-Stapel 13 auf einer Palette 14 gelagert. Mehrere Schichten bzw. Lagen solcher Zuschnitt-Stapel 13 sind als Stapel-Lagen 15 übereinander angeordnet. Die einzelnen Stapel-Lagen 15 sind gegeneinander abgegrenzt durch Zwischenlagen 16 aus einem dünnen, flexiblen Zuschnitt, insbesondere aus Papier. Innerhalb einer Stapel-Lage 15 sind die Zuschnitt-Stapel 13 in Reihen 17 von nebeneinander angeordneten Zuschnitt-Stapeln 13 formiert. Die Anordnung ist so getroffen, daß die langgestreckten Zuschnitte mit ihren Längsachsen parallel zueinander liegen. Die Vorsprünge 11 befinden sich jeweils an einer freien Seite der Stapel-Lage 15.

Die Zuschnitt-Stapel 13 werden lagenweise von der Palette 14 abgeräumt und in den Verarbeitungsprozeß der Verpackungsmaschine eingeführt. Hierfür wird ein Handhabungsgerät eingesetzt, insbesondere ein handelsüblicher Roboter, an dessen Auslegerarm ein Hubkopf 18 angebracht ist. Bei dem vorliegenden Ausführungsbeispiel ist der Hubkopf 18 über eine mittige Tragstange 19 mit dem Auslegerarm des Roboters oder einem anderen Gerät verbunden.

Der Hubkopf 18 ist auf die gleichzeitige Aufnahme mehrerer Zuschnitt-Stapel 13 eingerichtet. Im vorliegenden Falle werden vier nebeneinander liegende Zuschnitt-Stapel 13 aufgenommen und abtransportiert. Die Zuschnitt-Stapel 13 können dabei von dem Hubkopf 18 auf einem weiterfördernden Organ, z.B. einem Förderband, abgelegt werden.

Bei der Aufnahme der (vier) Zuschnitt-Stapel 13 durch den Hubkopf 18 werden die Zuschnitt-Stapel 13 zunächst komplett angehoben und sodann durch jeden Zuschnitt-Stapel 13 zugeordnete Stapelhalter übernommen. Jeder Stapelhalter 20 ist mit Organen zum Erfassen eines Zuschnitt-Stapels 13 an gegenüberliegenden Seiten versehen, nämlich an Unterseite und Oberseite. An der Unterseite des Zuschnitt-Stapels 13 kommt eine Klemmzunge 21 zur Anlage. An der Oberseite wirkt als Gegendruckorgan eine Druckplatte 22. Klemmzunge 21 und Druckplatte 22 sind relativ zueinander bewegbar. Im vorliegenden Falle ist die untere Klemmzunge 21 durch einen Druckmittelzylinder 23 auf- und abbewegbar. Ein Tragstück 24, an dem die Klemmzunge 21 einseitig vorstehend angeordnet ist, steht mit einer Kolbenstange 25 des aufrechten Druckmittelzylinders 23 in Verbindung. An dem Tragstück 24 sind Führungsbolzen 26 angebracht, die in Bohrungen eines Haltegestells 27 bei Bewegungen der Klemmzunge 21 auf- und abwärts gleiten.

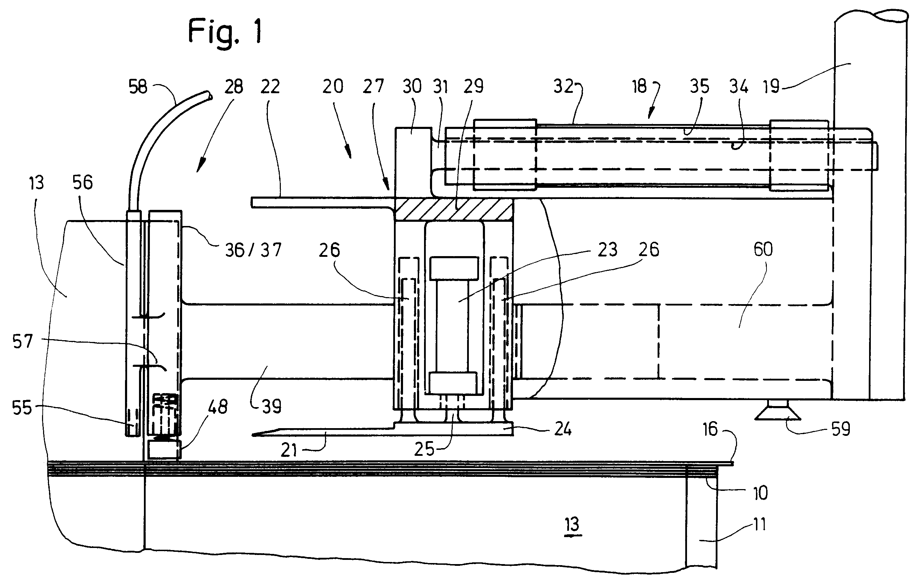

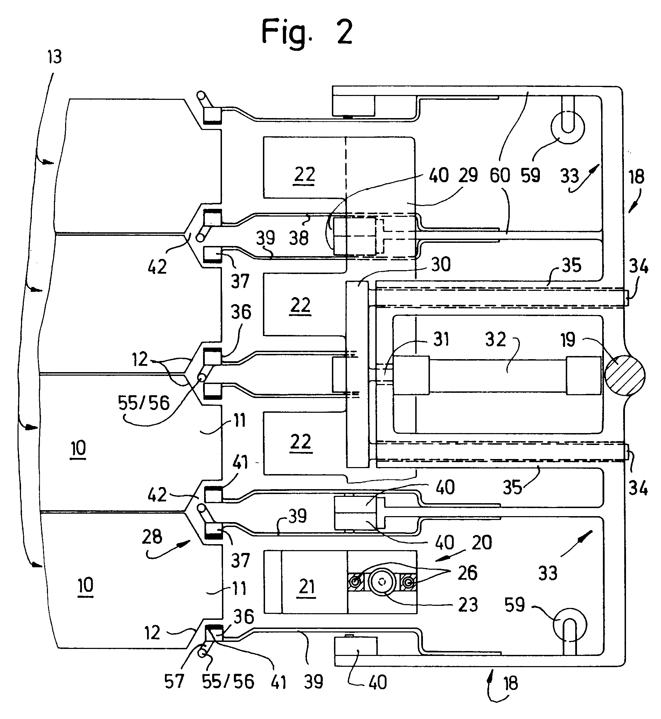

Der Hubkopf 18 ist mit gesonderten Organen zum Anheben des Zuschnitt-Stapels 13 versehen, derart, daß der Stapelhalter 20 in die Aufnahmeposition für den Zuschnitt-Stapel 13 fahren kann, also mit der Klemmzunge 21 unterhalb des Zuschnitt-Stapels 13. Jedem Stapelhalter 20 ist ein Stapelheber 28 zugeordnet. Dieser kommt zum Einsatz, bevor ein Zuschnitt-Stapel 13 durch den Stapelhalter 20 erfaßt wird. Der Stapelheber 28 ragt deshalb in der Ausgangsstellung (Fig. 1 und Fig. 2) über den Stapelhalter 20 hinweg. Wenn demnach der Hubkopf 18 an die zu erfassenden Zuschnitt-Stapel 13 herangefahren wird, kommen zuerst die Stapelheber 28 in die Arbeitsstellung. Sie erfassen den zugeordneten Zuschnitt-Stapel 13 und heben diesen an. Danach werden die Stapelhalter 20 relativ zu den Stapelhebern 28 in Richtung zu den Zuschnitt-Stapeln 13 verfahren, bis sich Klemmzunge 21 und Druckplatte 22 in der Position oberhalb und unterhalb des Zuschnitt-Stapels 13 befinden.

Die Stapelhalter 20 sind zu diesem Zweck gemeinsam relativ zu den Stapelhebern 28 verfahrbar. Alle Stapelhalter 20 des Hubkopfes 18 sind an einer als Flachprofil ausgebildeten horizontalen Traverse 29 angebracht, nämlich unterhalb derselben. Jeweils an der Unterseite der Traverse 29 befinden sich die Haltegestelle 27 für die Klemmzungen 21. Die Druckplatten 22 sind als kammartig angeordnete Vorsprünge der Traverse 29 ausgebildet.

Die Traverse 29 ist an der Oberseite mit einem aus einem Rechteckprofil bestehenden Zwischenstück 30 verbunden. Dieses sitzt mittig auf der Traverse 29 und ist mit einer Kolbenstange 31 eines horizontalen Druckmittelzylinders 32 als Betätigungsorgan für die Stapelhalter 20 verbunden.

Der Druckmittelzylinder sitzt an einer gestellartigen Tragvorrichtung 33 des Hubkopfes 18. Die Traverse 29 ist außerdem mit Führungsstangen 34 in Bohrungen einer Führung 35 der Tragvorrichtung 33 positionsgerecht geführt. Das Aus- und Einfahren der Kolbenstange 31 bewirkt demnach eine Verschiebung der Stapelhalter 20 in Richtung zu den aufzunehmenden Zuschnitt-Stapeln 13 oder zurück in die Ausgangsstellung gemäß Fig. 1 und Fig. 2.

Die Stapelheber 28 sind in besonderer Weise ausgebildet. Es handelt sich dabei um Klemmwerkzeuge, die jeden Zuschnitt-Stapel 13 seitlich erfassen und anheben. Bei dem vorliegenden Ausführungsbeispiel wird dabei die besondere Gestaltung der Zuschnitte 10 ausgenutzt.

Jeder Stapelheber 28 ist mit zwei aufrechten Klemmbacken 36, 37 ausgerüstet. Die Klemmbacken sind an den Enden von horizontalen Betätigungsarmen 38, 39 angeordnet. Diese bestehen im vorliegenden Fall aus einem Flachprofil, insbesondere aus Federstahl. Die Betätigungsarme 38, 39 sind demnach wie Blattfedern elastisch verformbar, nämlich horizontal verschwenkbar. Hierfür ist jedem Betätigungsarm 38, 39 ein Betätigungsorgan, und zwar ein Druckmittelzylinder 40 mit ausfahrbarer Kolbenstange zugeordnet. Es handelt sich dabei um einen Kurzhubzylinder. Die Kolbenstange desselben kommt unmittelbar zur Anlage an dem Betätigungsarm 38, 39.

Die Druckmittelzylinder 40 sind an den freien Enden von horizontal gerichteten Tragstreben 60 des Hubkopfes 18 angeordnet. Diese als Flachprofil ausgebildeten Tragstreben 60 dienen auch zur Befestigung der Betätigungsarme 38, 39 mit einem abgekröpften freien Ende.

An den Enden der Betätigungsarme 38, 39 sind die aufrechten Klemmbacken 36, 37 angeordnet, die im Bereich des Vorsprungs 11 der Zuschnitte 10 bzw. des Zuschnitt-Stapels 13 zur Anlage an diesem kommen. Die schmalen Klemmbacken 36, 37 weisen eine elastische Auflage 41 auf, die am Zuschnitt-Stapel 13 anliegt.

Da die Zuschnitt-Stapel 13 innerhalb der Reihen 17 bei gleicher Orientierung nebeneinanderliegen, entstehen im Bereich von Kopfenden der Zuschnitt-Stapel 13 Ausnehmungen 42, die durch die Vorsprünge 11 und die Kanten 12 begrenzt sind. In diese Ausnehmungen 42 treten jeweils die Klemmbacken 36, 37 der benachbarten Stapelheber 28 ein durch entsprechenden Vorschub des Hubkopfes 18. In der in Fig. 2 gezeigten Position können die Klemmbacken 36, 37 beaufschlagt werden, so daß sie unter Klemmwirkung an den Vorsprüngen 11 der Zuschnitt-Stapel 13 anliegen.

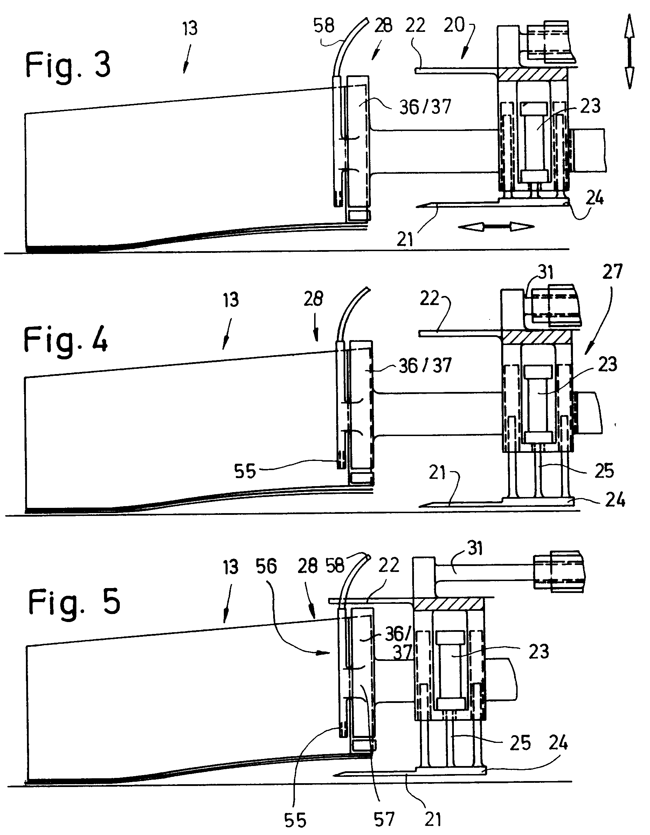

Nach dem Erfassen der Zuschnitt-Stapel 13 durch die Stapelheber 28 werden diese angehoben in eine Position entsprechend Fig. 3 bis Fig. 5. Diese Hubbewegung kann durch Anheben des gesamten Hubkopfes 18 erfolgen. Da die Zuschnitte 10 bzw. die Zuschnitt-Stapel 13 lediglich an einem Kopfende (Vorsprünge 11) erfaßt werden, wird ein den Stapelhebern 28 zugekehrter Bereich der Zuschnitt- Stapel 13 angehoben. Die Teilhubstellung der Zuschnitt- Stapel 13 ist aber ausreichend, um die Stapelhalter 20 in Position zu bringen. In Fig. 3 bis Fig. 5 sind die Bewegungsabläufe dargestellt. Nach Erreichen der angehobenen Stellung der Zuschnitt-Stapel 13 (Fig. 3) wird die Klemmzunge 21 nach unten ausgefahren (Fig. 4). Sie liegt dadurch in einer Ebene unterhalb des (angehobenen) Zuschnitt- Stapels 13. Sodann werden die Stapelhalter 20 gemeinsam in Richtung zu den Zuschnitt-Stapeln 13 bewegt, bis die Klemmzunge 21 und die Druckplatte 22 in die Aufnahmeposition unterhalb und oberhalb des Zuschnitt-Stapels 13 gelangen. Danach wird die Klemmzunge 21 aufwärts bewegt, so daß der Zuschnitt- Stapel 13 im Bereich des Kopfendes klemmend erfaßt wird. Nunmehr kann der Hubkopf 18 mit den Zuschnitt- Stapeln 13 insgesamt angehoben und zur Ablagestellung für die Zuschnitt-Stapel 13 bewegt werden.

Die besondere Kontur der Zuschnitte 10 im Kopfbereich, nämlich der schmale Vorsprung 11 und die anschließenden schrägen Kanten 12, erleichtern das Ansetzen der Klemmbacken 36, 37 des Stapelhebers 28. Die (offenen) Klemmbacken 36, 37 werden nämlich an die Zuschnitt-Stapel 13 im Bereich der durch die Kanten 12 gebildeten schrägen Flächen herangefahren und gleiten sodann beim Schließen der Klemmbacken 36, 37 an diesen entlang. Die schrägen Flächen bewirken so eine Führung der Klemmbacken 36, 37 beim Schließvorgang.

Die Stapelheber 28 und deren Klemmbacken 36, 37 sind in besonderer Weise ausgebildet. In einem Hohlraum 43 der Klemmbacken 36, 37 - im vorliegenden Falle eine von der Oberseite her in die Klemmbacken eintretende Bohrung - sind optoelektrische Sensoren 44, 45 angeordnet. Diese sind über Leitungen 46 mit einem elektronischen Auswerteorgan verbunden. Die Sensoren 44, 45 erzeugen eine Lichtschranke 47. Mit Hilfe dieser Kontrolleinrichtung wird für jeden Stapelheber 28 festgestellt, ob ein Zuschnitt-Stapel 13 im Bereich des betreffenden Stapel-Hebers 28 vorhanden ist und sich in einer ordnungsgemäßen Stellung befindet.

Mindestens die beiden äußeren Klemmbacken 36, 37 des Hubkopfes 18 sind mit einem weiteren Tastorgan versehen. Es handelt sich dabei um einen an der Unterseite der Klemmbacken 36, 37 angeordneten Taststößel 48. Dieser bildet den unteren Teil der Klemmbacke 36, 37, ist also Teil derselben. Der Taststößel 48 ist mit einem Bolzen 49 in einer aufrechten Bohrung 50 der Klemmbacke 36, 37 verschiebbar gelagert, und zwar gegen den Druck einer Feder 51 in der Bohrung 50. Ein quergerichteter Haltestift 52 verhindert Drehbewegungen des Taststößels 48 und ein Herausfallen desselben aus der Bohrung 50.

Durch den Taststößel 48 soll erreicht werden, daß die Klemmbacken 36, 37 in der Position zum Anheben eines Zuschnitt-Stapels 13 korrekt auf der Unterlage aufliegen, insbesondere auf der Zwischenlage 16. Die Stapelheber 28 werden demnach an die Zuschnitt-Stapel 13 herangefahren und in der Klemmstellung zunächst abgesenkt, bis der Taststößel 48 unter Zusammendrücken der Feder 51 am unteren Ende des übrigen Teils der Klemmbacke 36, 37 anliegt. Es wird nun ein Signal ausgelöst, welches den Klemmvorgang einleitet. Als Signalgeber wirken hier sogenannte Initiatoren 53, 54, von denen im vorliegenden Falle aus Sicherheitsgründen zwei übereinander angeordnet sind. Die Initiatoren 53, 54 werden durch den Bolzen 49 des Taststößels 48 bei der Aufwärtsbewegung beaufschlagt.

Die eigentliche Besonderheit der Vorrichtung liegt in Maßnahmen für eine korrekte Aufnahme bzw. für ein korrektes Anheben der Zuschnitt-Stapel 13 mit allen Zuschnitten 10. Die Klemmbacken 36, 37 sind aufgrund der Klemmstellung nicht geeignet, zuverlässig den gesamten Zuschnitt-Stapel 13 aufzunehmen. Untere Zuschnitte 10 z.B. die unteren zwei, drei oder vier Zuschnitte 10 werden erfahrungsgemäß nicht erfaßt. Diese sollen aber ebenfalls von dem Stapelhalter 20 aufgenommen werden.

Zu diesem Zweck sind den Stapelhebern 28 gesonderte Hubmittel zugeordnet, die eine Aufwärtsbewegung bzw. ein Anheben der unteren, von den Klemmbacken 36, 37 nicht erfaßten Zuschnitte 10 bewirken. Zu diesem Zweck wird ein Luftstrahl von oben her auf die Unterlage gerichtet, nämlich auf die jeweilige obere Zwischenlage 16. Der Luftstrahl trifft neben den Zuschnitt-Stapeln 13 auf die Zwischenlage 16, und zwar in einem Bereich unmittelbar benachbart zu den Klemmbacken 36, 37. Der senkrecht oder annähernd senkrecht gerichtete Druckluftstrahl bewirkt ein Anheben der unteren, freien Zuschnitte 10 von der Unterlage (Zwischenlage 16), so daß diese Zuschnitte mindestens im Bereich des Vorsprungs 18 an die Unterseite des angehobenen Zuschnitt-Stapels 13 herangeführt werden. Die Organe des Stapelhalters 20 können deshalb den vollständigen Zuschnitt-Stapel 13 an der Unterseite erfassen.

Der Druckluftstrahl wird durch aufrechte Luftdüsen 55 erzeugt. Es handelt sich dabei um aufrechte Rohrstücke 56, die über ein Verbindungsstück 57 mit der benachbarten Klemmbacke 36, 37 verbunden sind. Das Rohrstück 56 bzw. die Luftdüse 55 ist über eine Schlauchleitung 58 mit einer (zentralen) Druckluftquelle verbunden.

Die Luftdüsen 55 sind im Bereich der Ausnehmungen 42 angeordnet, also seitlich neben den Zuschnitten 10. Für die Wirkungsweise der Luftdüsen 55 bzw. des Luftstrahls ist von Bedeutung, daß zu beiden Seiten jedes Zuschnitt-Stapels 13 ein derartiger Luftstrahl wirksam ist. Bei dem vorliegenden Beispiel befindet sich in den Ausnehmungen 42 zwischen benachbarten Zuschnitt-Stapeln 13 jeweils nur eine Luftdüse 55, die somit für beide benachbarten Zuschnitt-Stapel 13 wirksam ist.

Die Druckluft kann durch die Luftdüsen 55 mit einem Druck von 5 bis 7 bar auf die Unterlage gerichtet werden. Die Luftdüsen 55 sind bei dem gezeigten Ausführungsbeispiel in der unteren Position der Stapelheber 28 etwa 5 bis 10 mm von der Unterlage (Zwischenlage 16) entfernt. Der Innendurchmesser der Luftdüse 55 bzw. des Rohrstücks 56 beträgt etwa 4 mm.

Die Arbeitsweise der so ausgebildeten Stapelheber 28 ist für die Funktion der Vorrichtung von ausschlaggebender Bedeutung. Wenn mehrere nebeneinanderliegende Zuschnitt-Stapel 13 gleihzeitig erfaßt werden sollen, ist die Ausbildung der Zuschnitte 10 mit einem Bereich geringerer Breite wichtig, damit die Klemmorgane des Stapelhebers 28 seitlich wirksam werden können. Durch die Wirkung der Luftdüsen 55 bzw. des (annähernd) vertikalen Luftstroms wird eine vollständige Aufnahme des Zuschnitt-Stapels 13 bewirkt ohne Gefahr von Beschädigungen der unteren Zuschnitte durch mechanische Organe.

Die Vorrichtung ist mit einer weiteren Besonderheit ausgestattet. Wenn eine aus Zuschnitt-Stapeln 13 bestehende Stapel-Lage 15 abgeräumt ist, liegt eine Zwischenlage 16 frei auf der nächsten Stapel-Lage 15. Die Zwischenlage 16 muß abgeräumt werden, und zwar ohne Verschiebung von Zuschnitten der darunter lagernden Stapel-Lage 15.

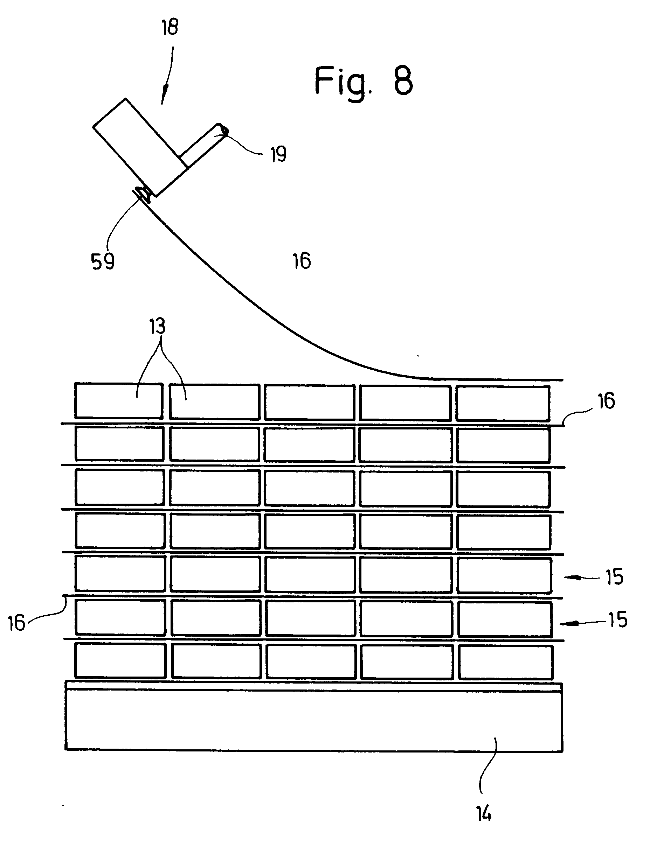

Bei der gezeigten Vorrichtung ist der Hubkopf 18 mit Organen zum Erfassen der oberen, freien Zwischenlage 16 versehen. Es handelt sich dabei um Saugorgane 59, die die Zwischenlage 16 mit Unterdruck an der Oberseite erfassen. Die Saugorgane - bei dem vorliegenden Ausführungsbeispiel zwei - sind am Hubkopf 18, nämlich an der Tragvorrichtung 33 desselben angeordnet. Die Saugorgane 59 befinden sich in einem von Stapelhalter 20 und Stapelheber 28 entfernt liegenden, dem rückseitigen Teil des Hubkopfes 18 zugekehrten Bereich, und zwar an den Seiten, also mit großem Abstand voneinander. Nach dem Abräumen einer Stapel-Lage 15 fährt der Hubkopf 18 über die Palette 14 hinweg, bis die Saugorgane 59 die Zwischenlage 16 in einem Randbereich erfassen. Der Hubkopf 18 wird nun angehoben unter gleichzeitigem Kippen. Dadurch wird auch die Zwischenlage 16 einseitig angehoben und, wie aus Fig. 8 ersichtlich, in einer Abrollbewegung nach und nach von der nächsten Stapellage 16 abgehoben. Auf die Zuschnitte 10 der nächsten Stapellage 16 werden demnach keine quergerichteten (Reib-)Kräfte übertragen. Diese Art der Abnahme einer Zwischenlage 16 kann naturgemäß auch unabhängig von der Ausbildung der Organe zum Transportieren der Zuschnitt-Stapel 13 eingesetzt werden.

## Patentansprüche

1. Verfahren zum Handhaben von Zuschnitt-Stapeln (13) im Zusammenhang mit einer Verpackungsmaschine, wobei die Zuschnitt-Stapel auf einer Unterlage ruhen und von dieser zur Verarbeitung in der Verpackungsmaschine abgehoben werden, **dadurch gekennzeichnet**, daß beim Anheben des Zuschnitt-Stapels (13) von der Unterlage nicht erfaßte, wenige, untere Zuschnitte (10) des Zuschnitt-Stapels (13) durch einen Luftstrom mit angehoben werden, der neben dem Zuschnitt-Stapel von oben her auf die Unterlage gerichtet wird, und daß dann der Zuschnitt-Stapel (13) komplett erfaßt wird.

2. Verfahren nach Anspruch 1, **dadurch gekennzeichnet**, daß der Zuschnitt-Stapel (13) durch mechanische Klemmorgane, insbesondere Klemmbacken (36, 37) eines Stapelhebers (28) angehoben und gleichzeitig Blasluft auf die Unterlage neben dem Zuschnitt-Stapel (13) gerichtet wird, und daß dann der Zuschnitt-Stapel (13) komplett erfaßt wird.

3. Verfahren nach Anspruch 1 oder 2, **dadurch gekennzeichnet**, daß zu beiden Seiten des Zuschnitt-Stapels (13) mindestens ein Luftstrahl auf die Unterlage gerichtet wird, insbesondere benachbart zu den Klemmbacken (36, 37).

4. Verfahren nach Anspruch 1 oder einem der weiteren Ansprüche, dadurch gekennzeichnet, daß der Zuschnitt-Stapel (13) zuerst im Bereich von einander gegenüberliegenden Seitenflächen erfaßt und angehoben und gleichzeitig mindestens ein Luftstrahl gegen die Unterlage neben dem Zuschnitt-Stapel (13) gerichtet wird und daß nach dem Anheben des gesamten Zuschnitt-Stapels (13) dieser an Oberseite und Unterseite erfaßt sowie abtransportiert wird.

5. Verfahren nach Anspruch 1 oder einem der weiteren Ansprüche, dadurch gekennzeichnet, daß zwischen mehreren übereinandergestapelten Lagen (15) von Zuschnitt-Stapeln (13) eine Zwischenlage (16) vorgesehen ist, wobei die nach Abräumen einer Lage freie, obere Zwischenlage (16) ausschließlich an einem Rand derselben erfaßt und durch Abrollen von der sich darunter befindenden Lage (15) abgezogen wird.

6. Vorrichtung zum Handhaben von auf einer Unterlage ruhenden Zuschnitt-Stapeln (13), insbesondere im Zusammenhang mit einer Verpackungsmaschine, wobei die Zuschnitt-Stapel (13) durch Klemmorgane aufweisende Stapelhalter (20) eines an einem Förderorgan angeordneten Hubkopfes (18) an Oberseite und Unterseite erfaßbar und abtransportierbar sind, dadurch gekennzeichnet, daß jeder Zuschnitt-Stapel (13) durch einen gesonderten Stapelheber (28) anhebbar und dabei ein Luftstrahl von oben her gegen die Unterlage oder gegen eine als Unterlage wirkende Zwischenlage (16) zwischen übereinanderliegenden Lagen (15) von Zuschnitt-Stapeln (13) gerichtet ist und zwar benachbart zum Zuschnitt-Stapel (13) und daß die angehobenen Zuschnitt-Stapel (13) durch die Klemmorgane der Stapelhalter (20) erfaßbar sind.

7. Vorrichtung nach Anspruch 6, dadurch gekennzeichnet, daß die Stapelheber (28) Klemmbacken (36, 37) aufweisen, die an aufrechten Seitenflächen der Zuschnitt-Stapel (13) angreifen, insbesondere im Bereich eines schmaleren Vorsprungs (11) der Zuschnitt-Stapel und das Luftdüsen (55) zur Erzeugung eines gegen die Unterlage gerichteten Luftstroms seitlich neben den Zuschnitt-Stapeln (13) am Stapelheber (28) angeordnet sind.

8. Vorrichtung nach Anspruch 6 oder 7, dadurch gekennzeichnet, daß die Luftdüsen (55) bei Zuschnitt-Stapeln (13) mit Vorsprung (11) von geringerer Breite als der Zuschnitt-Stapel (13) im übrigen im Bereich von zwischen benachbarten Zuschnitt-Stapeln (13) gebildeten Ausnehmungen (42) angeordnet und insbesondere mit den Klemmbacken (36, 37) verbunden sind.

9. Vorrichtung nach Anspruch 7 oder einem der weiteren Ansprüche, dadurch gekennzeichnet, daß die Klemmbacken (36, 37) der Stapelheber (28) an der Unterseite ein mechanisches Tastorgan aufweisen, insbesondere einen Taststößel (48) der beim Aufsetzen der Stapelheber (28) auf die Unterlage bzw. Zwischenlage (16) gegen elastischen Druck in die Klemmbacken (36, 37) verfahrbar ist und dabei ein Signal auslöst.

10. Vorrichtung nach Anspruch 6 oder einem der weiteren Ansprüche, dadurch gekennzeichnet, daß der eine untere Klemmzunge (21) und eine obere Druckplatte (22) aufweisende Stapelhalter (20) in der Ausgangsstellung gegenüber dem Stapelheber (28) eine zurückgezogene Stellung aufweist und nach Anheben des Zuschnitt-Stapels (13) in Richtung auf diesen verfahrbar ist, derart, daß die Klemmzunge (21) als unteres Klemmorgan unter den angehobenen Zuschnitt-Stapel (13) gelangt.

11. Vorrichtung nach Anspruch 10 oder einem der weiteren Ansprüche, dadurch gekennzeichnet, daß mehrere, insbesondere vier Stapelhalter (20) für je einen Zuschnitt-Stapel (13) an einer gemeinsamen Traverse (29) angeordnet und diese durch einen mittigen gemeinsamen Druckmittelzylinder (32) vor- und zurückbewegbar ist.

12. Vorrichtung nach Anspruch 7 oder einem der weiteren Ansprüche, dadurch gekennzeichnet, daß die aufrechten Klemmbacken (36, 37) an Betätigungsarmen (38, 39) angeordnet sind, die aus elastischem Werkstoff, insbesondere Federstahl, bestehen und durch jedem Betätigungsarm (38, 39) zugeordnete Druckmittelzylinder (40) in schwenkbarem Sinne betätigbar sind.

13. Vorrichtung nach Anspruch 8 oder einem der weiteren Ansprüche, dadurch gekennzeichnet, daß in einer Ausnehmung (42) zwischen benachbarten Zuschnitt-Stapeln (13) eine für beide benachbarte Zuschnitt-Stapel (13) gemeinsame Luftdüse (55) angeordnet ist.

14. Vorrichtung nach Anspruch 6 oder einem der weiteren Ansprüche, dadurch gekennzeichnet, daß an dem Hubkopf (18) mit Abstand voneinander mehrere, insbesondere zwei Organe zum Erfassen einer freiliegenden Zwischenlage (16) angeordnet sind, insbesondere Saugorgane (59) und daß die Zwischenlage (16) durch diese Saugorgane an einem Rand erfaßbar und durch entsprechende Bewegung des Hubkopfes (18) in einer Abrollbewegung von der Palette (14) abziehbar ist.

## Claims

1. Process for handling stacks (13) of blanks in conjunction with a packaging machine, the stacks of blanks resting on a base and being lifted off from said base in order to be processed in the packaging machine, characterized in that, when the stack (13) of blanks is lifted from the base, a small number of blanks (10) at the bottom of the stack (13) of blanks which have not been gripped are also lifted by way of an air stream which is directed onto the base from above, beside the stack of blanks, and in that the stack (13) of blanks is then gripped in its entirety.

2. Process according to Claim 1, characterized in that the stack (13) of blanks is lifted by mechanical clamping elements, in particular clamping jaws (36, 37) of a stack lifter (28), and at the same time blowing air is directed onto the base, beside the stack (13) of blanks, and in that the stack (13) of blanks is then gripped in its entirety.

3. Process according to Claim 1 or 2, characterized in that, on both sides of the stack (13) of blanks, at least one jet of air is directed onto the base, in particular adjacent to the clamping jaws (36, 37).

4. Process according to Claim 1 or one of the further claims, characterized in that the stack (13) of blanks is first of all gripped in the region of mutually opposite side surfaces and lifted and, at the same time, at least one jet of air is directed against the base, beside the stack (13) of blanks, and in that, once the entire stack (13) of blanks has been lifted, it is gripped on the top side and underside and transported away.

5. Process according to Claim 1 or one of the further claims, characterized in that provided between a plurality of layers (15), stacked one above the other, of stacks (13) of blanks is an intermediate sheet (16), the top intermediate sheet (16), which is exposed once a layer has been removed, being gripped at just one border and being drawn off, by a rolling action, from the layer (15) located therebeneath.

6. Apparatus for handling stacks (13) of blanks resting on a base, in particular in conjunction with a packaging machine, it being possible for the stacks (13) of blanks to be gripped on the top side and underside by stack-retaining means (20), which have clamping elements, of a lifting head (18), which is arranged on a conveying element, and transported away, characterized in that each stack (13) of blanks can be lifted by a separate stack lifter (28) and in the process a jet of air is directed from above against the base or against an intermediate sheet (16), which acts as base, between layers (15), located one above the other, of stacks (13) of blanks, to be precise said jet of air being positioned adjacent to the stack (13) of blanks, and in that the lifted stacks (13) of blanks can be gripped by the clamping elements of the stack-retaining means (20).

7. Apparatus according to Claim 6, characterized in that the stack lifters (28) have clamping jaws (36, 37) which act on upright side surfaces of the stacks (13) of blanks, in particular in the region of a relatively narrow protrusion (11) of the stacks of blanks, and in that, in order to produce an air stream which is directed against the base, air nozzles (55) are arranged on the stack lifter (28), to the sides of the stacks (13) of blanks.

8. Apparatus according to Claim 6 or 7, characterized in that, in the case of stacks (13) of blanks with a protrusion (11) which is of a width which is smaller than the stacks (13) of blanks, the air nozzles (55) are also arranged in the region of recesses (42) formed between adjacent stacks (13) of blanks, and are connected, in particular, to the clamping jaws (36, 37).

9. Apparatus according to Claim 7 or one of the further claims, characterized in that, on the underside, the clamping jaws (36, 37) of the stack lifters (28) have a mechanical sensing element, in particular a sensing push rod (48) which, when the stack lifters (28) are positioned on the base or intermediate sheet (16), can be displaced into the clamping jaws (36, 37) counter to elastic pressure and emits a signal in the process.

10. Apparatus according to Claim 6 or one of the further claims, characterized in that, in the initial position, the stack-retaining means (20), which has a bottom clamping tongue (21) and a top pressure-exerting plate (22), is retracted with respect to the stack lifter (28) and, once the stack (13) of blanks has been lifted, the stack-retaining means can be displaced in the direction of said stack such that the clamping tongue (21) passes, as bottom clamping element, beneath the lifted stack (13) of blanks.

11. Apparatus according to Claim 10 or one of the further claims, characterized in that a plurality of, in particular four, stack-retaining means (20), each being intended for one stack (13) of blanks, are arranged on a common crossmember (29), and the latter can be moved forward and back by a common, central pressure-medium cylinder (32).

12. Apparatus according to Claim 7 or one of the further claims, characterized in that the upright clamping jaws (36, 37) are arranged on actuating arms (38, 39) which consist of elastic material, in particular spring steel, and can be made to pivot by pressure-medium cylinders (40) which are assigned to each actuating arm (38, 39).

13. Apparatus according to Claim 8 or one of the further claims, characterized in that arranged in a recess (42) between adjacent stacks (13) of blanks is an air nozzle (55) which is common to both adjacent stacks (13) of blanks.

14. Apparatus according to Claim 6 or one of the further claims, characterized in that a plurality of, in particular two, elements, in particular suction elements (59), for gripping an exposed intermediate sheet (16) are arranged spaced apart from one another on the lifting head (18), and in that the intermediate sheet (16) can be gripped at one border by these suction elements and, by appropriate movement of the lifting head (18), can be drawn off from the pallet (14) in a rolling movement.

## Revendications

1. Procédé de manipulation de piles de flans (13) en liaison avec une empaqueteuse, dans lequel les piles de flans reposent sur un support et en sont enlevées pour être mises en oeuvre dans l'empaqueteuse, caractérisé par le fait que, lors du soulèvement de la pile de flans (13) du support, les quelques flans (10) inférieurs de la pile (13) non saisis sont soulevés par un courant d'air qui est dirigé d'en haut sur le support près de la pile, et que la pile (13) est alors saisie complètement.

2. Procédé selon la revendication 1, caractérisé par le fait que la pile de flans (13) est soulevée par des organes de serrage mécaniques, en particulier des mâchoires (36, 37) d'un élévateur de pile (28), et, en même temps, de l'air soufflé est dirigé sur le support près de la pile (13), et que la pile (13) est alors saisie complètement.

3. Procédé selon l'une des revendications 1 et 2, caractérisé par le fait que, des deux côtés de la pile de flans (13), au moins un jet d'air est dirigé sur le support, en particulier à proximité des mâchoires (36, 37).

4. Procédé selon la revendication 1 ou une des autres revendications, caractérisé par le fait que la pile de flans (13) est d'abord saisie dans la zone de surfaces latérales opposées et soulevée et en même temps, au moins un jet d'air est dirigé sur le support près de la pile (13), et que, après le soulèvement de la pile (13) entière, celle-ci est saisie sur le dessus et sur le dessous et évacuée.

5. Procédé selon la revendication 1 ou une des autres revendications, caractérisé par le fait qu'entre plusieurs couches empilées (15) de piles de flans (13) est prévue une couche intermédiaire (16), et la couche intermédiaire (16) supérieure dégagée après enlèvement d'une couche est saisie exclusivement sur un bord et enlevée par déroulement de la couche (15) située dessous.

6. Dispositif de manipulation de piles de flans (13) reposant sur un support, en particulier en liaison avec une empaqueteuse, dans lequel les piles de flans (13) sont saisies sur le dessus et sur le dessous par des porte-piles (20), présentant des organes de serrage, d'une tête élévatrice (18) placée sur un organe transporteur et évacuées, caractérisé par le fait que chaque pile de flans (13) est soulevée par un élévateur de pile séparé (28) et un jet d'air est alors dirigé d'en haut sur le support ou sur une couche intermédiaire (16) jouant le rôle de support placée entre les couches superposées (14) de piles de flans (13), ce à proximité de la pile de flans (13), et que les piles de flans (13) soulevées sont saisies par les organes de serrage des porte-piles (20).

7. Dispositif selon la revendication 6, caractérisé par le fait que les élévateurs de pile (28) présentent des mâchoires (36, 37) qui s'appliquent sur des surfaces latérales verticales des piles de flans (13), en particulier dans la zone d'une saillie plus étroite (11) des piles de flans, et que des buses à air (55), pour la production d'un courant d'air dirigé sur le support, sont placées latéralement près des piles de flans (13) sur l'élévateur de pile (28).

8. Dispositif selon l'une des revendications 6 et 7, caractérisé par le fait que les buses à air (55), avec des piles de flans (13) ayant une saillie (11) moins large qu'elles, sont en outre placées dans la zone d'évidements (42) formés entre les piles de flans (13) voisines et en particulier jointes aux mâchoires (36, 37).

9. Dispositif selon la revendication 7 ou une des autres revendications, caractérisé par le fait que les mâchoires (36, 37) des élévateurs de piles (28) présentent sur le dessous un organe palpeur mécanique, en particulier un poussoir palpeur (48) qui, lors de la pose des élévateurs de pile (28) sur le support ou sur la couche intermédiaire (16), rentre dans les mâchoires (36, 37) contre une pression élastique et déclenche alors un signal.

10. Dispositif selon la revendication 6 ou une des autres revendications, caractérisé par le fait que le porte-pile (20), qui présente une langue de serrage inférieure (21) et une plaque presseuse supérieure (22), est, en position initiale, reculé par rapport à l'élévateur de pile (28) et, après soulèvement de la pile de flans (13), est déplacé en direction de celle-ci, de façon telle que la langue de serrage (21) aille comme organe inférieur de serrage sous la pile (13) soulevée.

11. Dispositif selon la revendication 10 ou une des autres revendications, caractérisé par le fait que plusieurs, en particulier quatre, porte-piles (20), chacun pour une pile de flans (13), sont placés sur une traverse commune (29), et celle-ci est avancée et reculée par un vérin commun central (32).

12. Dispositif selon la revendication 7 ou une des autres revendications, caractérisé par le fait que les mâchoires (36, 37), verticales, sont placées sur des bras de manoeuvre (38, 39) qui sont en matériau élastique, en particulier en acier à ressorts, et actionnés en pivotement par des vérins (40) associés à chacun d'eux.

13. Dispositif selon la revendication 8 ou une des autres revendications, caractérisé par le fait que, dans un évidement (42) situé entre piles de flans (13) voisines, est placée une buse à air (55) commune aux deux piles (13) voisines.

14. Dispositif selon la revendication 6 ou une des autres revendications, caractérisé par le fait que, sur la tête élévatrice (18), sont placés à distance les uns des autres ou l'un de l'autre plusieurs, en particulier deux, organes de saisie d'une couche intermédiaire (16) dégagée, en particulier des organes d'aspiration (59), et que la couche intermédiaire (16) est saisie par ces organes d'aspiration sur un bord et retirée de la palette (14) en un mouvement de déroulement par mouvement correspondant de la tête élévatrice (18).
